# EUROPEAN PATENT SPECIFICATION

(11) **EP 4 213 963 B1**
(45) Date of publication and mention of the grant of the patent: **01.07.2026**
(21) Application number: 21873735.1
(22) Date of filing: 30.09.2021
(51) Int. Cl.: B01D 33/056, B07B 1/10, C02F 11/123, B01D 33/333

(54) **A SCREEN PANEL MOUNTING ARRANGEMENT**
BEFESTIGUNGSANORDNUNG FÜR BILDSCHIRMTAFEL
AGENCEMENT DE MONTAGE DE PANNEAU À TAMIS

(30) Priority: 02.10.2020 AU 2020903578
(43) Date of publication of application: 26.07.2023
(73) Proprietor: Aqseptence Group Pty Ltd, Eagle Farm, QLD 4009 (AU)
(72) Inventor: VISSER, Denys, Geebung, QLD 4034 (AU); SOLOMON, Ian, Geebung, QLD 4034 (AU); SUSANTO, Chris, Geebung, QLD 4034 (AU)
(74) Representative: Lorenz Seidler Gossel Part. mbB
(86) International application number: PCT/AU2021/051146
(87) International publication number: WO 2022/067391

(56) References cited:
- US-A1- 2007 215 539
- US-A1- 2016 114 268
- US-B2- 10 486 091

## Description

### Technical Field

The present disclosure relates, generally, to components for use in a continuous belt screen assembly and, more particularly, to a mounting system for mounting a screen panel in a continuous belt screen assembly and to a mounting kit for mounting a screen panel in a continuous belt screen assembly.

### Background

Continuous belt screen assemblies are used in wastewater management to filter solid debris from wastewater. A continuous belt screen assembly comprises screen panels which continuously move through the wastewater in order to capture solid debris carried by the wastewater, and must therefore be secured within the continuous belt screen assembly while allowing for ease of rotation.

With time, these screen panels lose their filtering efficiency and require replacement. In order to do so, the continuous belt screen assembly needs to be taken out of operation and the relevant screen panel/s removed and replaced. It is beneficial if the assembly is out of operation for as short a period of time as possible.

US Patent No. 10,486,091 describes a continuous belt screen assembly for removal of solid waste from fluid, comprising a pair of spaced, opposing endless belts, lifters, and screen panels. Each screen panel is interposed between a pair of lifters and secured in place by engagement with the lifters through opposing slots defined by the lifters. The lifters are pivotally mounted to pivot shafts extending between the belts and may comprise a flexible material configured to deflect as the belt screen assembly travels around a curved path. The screen panels may be released from the slots by releasing tension on the endless belt and manipulation of the lifters and screen panels, allowing for replacement without complete disassembly of the system.

US Patent Application Publication No. 2007/0215539 discloses another continuous belt screen assembly configuration for filtering solid debris from wastewater. This system includes screen panels mounted between endless belts with various mounting arrangements for securing the panels during operation while facilitating maintenance and replacement procedures.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each of the appended claims.

### Summary

In an aspect of the present disclosure, there is provided a mounting system for mounting a screen panel in a continuous belt screen assembly used for removal of solid waste from fluid, the continuous belt screen assembly comprising a pair of spaced, opposed endless belts and a plurality of screen panels arranged between the belts, the mounting system comprising: a first set of links mountable in spaced, parallel relationship between the pair of belts, each link of the first set of links defining a first recessed portion; and a second set of links mountable in spaced, parallel relationship between the pair of belts, the second set of links being configured to be interposed between, and aligned with, the first set of links, each link of the second set of links defining a second recessed portion, the second recessed portions facing in a direction opposite to that of the first recessed portions, in use, so that the first and second recessed portions, together, define a channel in which the screen panel is receivable.

The links of the first set of links may be configured to alternate with the links of the second set of links along a length of the screen panel. The first set of links may be configured to be disposed on one side of the screen panel, and the second set of links may be configured to be disposed on an opposed side of the screen panel. Each of the first recessed portions and the second recessed portions may be substantially U-shaped to bound at least one side and opposed longitudinal edges of the screen panel.

The continuous belt screen assembly may comprise shafts extending between the pair of belts, and each end of each link of the first and second sets of links may comprise a mounting formation via which that end of the link is mountable to one of the shafts. An axial plane of the screen panel may intersect a pair of the shafts, in use.

At least one link of the first and second sets of links may comprise a lifter to assist with removing the solid waste from the fluid. The lifter may be in the form of a hook.

In another aspect of the present disclosure, there is provided a continuous belt screen assembly comprising the mounting system described above.

In yet another aspect of the present disclosure, there is provided a mounting kit for mounting a screen panel in a continuous belt screen assembly used for removal of solid waste from fluid, the continuous belt screen assembly comprising a pair of spaced, opposed endless belts and a plurality of screen panels arranged between the belts, the kit comprising: a first set of links, each link of the first set of links defining a first recessed portion; and a second set of links, each link of the second set of links defining a second recessed portion, in which the first and second sets of links are mountable in spaced, parallel relationship between the pair of belts, the second set of links being configured to be interposed between, and aligned with, the first set of links such that the second recessed portions face in a direction opposite to that of the first recessed portions for defining a channel in which the screen panel is receivable.

The links of the first set of links may be configured to alternate with the links of the second set of links along a length of the screen panel. The first set of links may be configured to be disposed on one side of the screen panel, and the second set of links may be configured to be disposed on an opposed side of the screen panel. Each of the first recessed portions and the second recessed portions may be substantially U-shaped to bound at least one side and opposed longitudinal edges of the screen panel.

The continuous belt screen assembly may comprise shafts extending between the pair of belts, and in which each end of each link of the first and second sets of links comprises a mounting formation via which that end of the link is mountable to one of the shafts.

At least one link of the first and second sets of links may comprise a lifter to assist with removing the solid waste from the fluid. The lifter may be in the form of a hook.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

Embodiments of the disclosure will now be described by way of example only with reference to the accompanying drawings in which:
Figure 1 shows a perspective view of an embodiment of a continuous belt screen assembly;
Figure 2 shows a perspective view of a section of a belt screen of the assembly of Figure 1, the belt screen incorporating an embodiment of a mounting system for mounting a screen panel in the continuous belt screen assembly;
Figure 3a shows a side view of an embodiment of a link of a first set of links of the mounting system for mounting the screen panel in the belt screen shown in Figure 2;
Figure 3b shows an end view of an embodiment of a link of a second set of links of the mounting system for mounting the screen panel in the belt screen shown in Figure 2;
Figure 4 shows a perspective view of the mounting system without the screen panel installed;
Figure 5 shows a perspective view of the mounting system shown in Figure 4 with the screen panel installed; and
Figure 6 shows a section view of the link shown in Figure 3a, in use, with an axial plane of the screen panel being shown to intersect mounting shafts of the continuous belt screen assembly shown in Figure 1.

### Detailed Description of Exemplary Embodiments

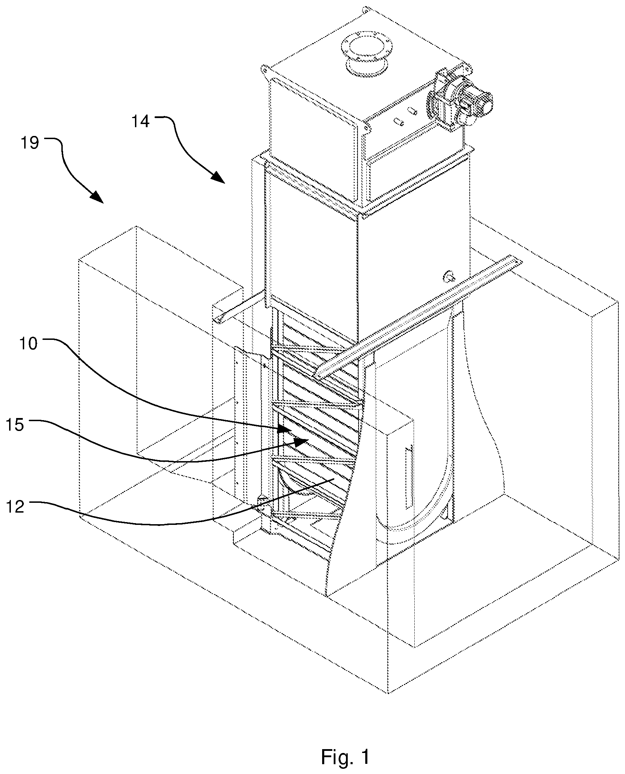

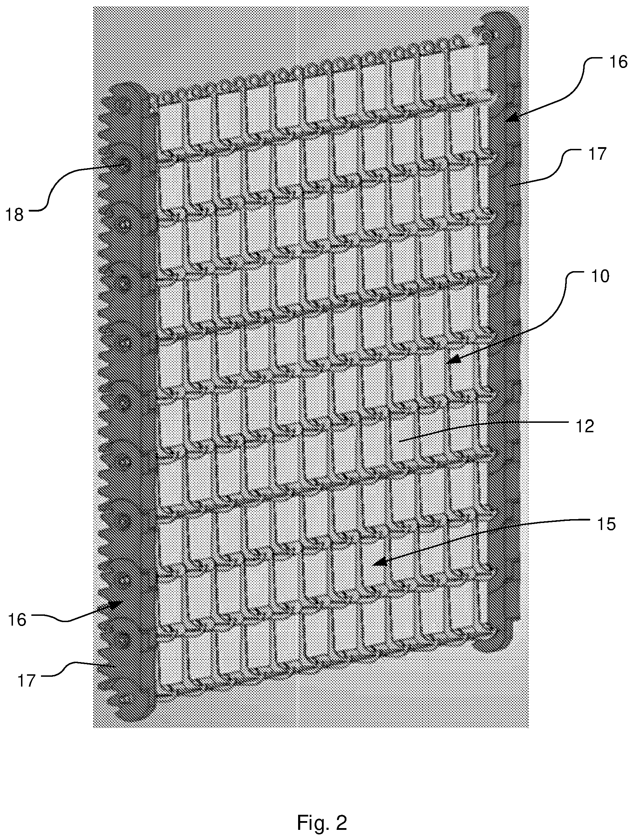

In the drawings, reference numeral 10 generally designates a mounting system 10 for mounting a screen panel 12 in a continuous belt screen assembly 14 used for filtering of solid waste from fluid (not shown) flowing through a fluid channel 19. As shown in Figures 1 and 2, the continuous belt screen assembly 14 comprises a pair of spaced, opposed endless belts 16, spaced, parallel shafts 18 extending between the pair of belts 16, and a plurality of screen panels 12 arranged between the belts 16 to form a screen 15.

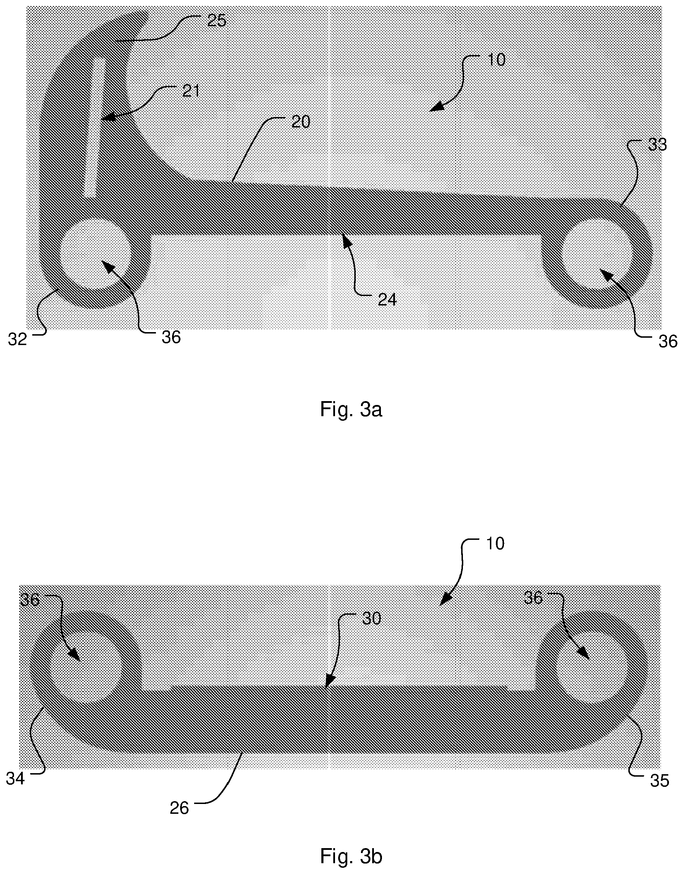

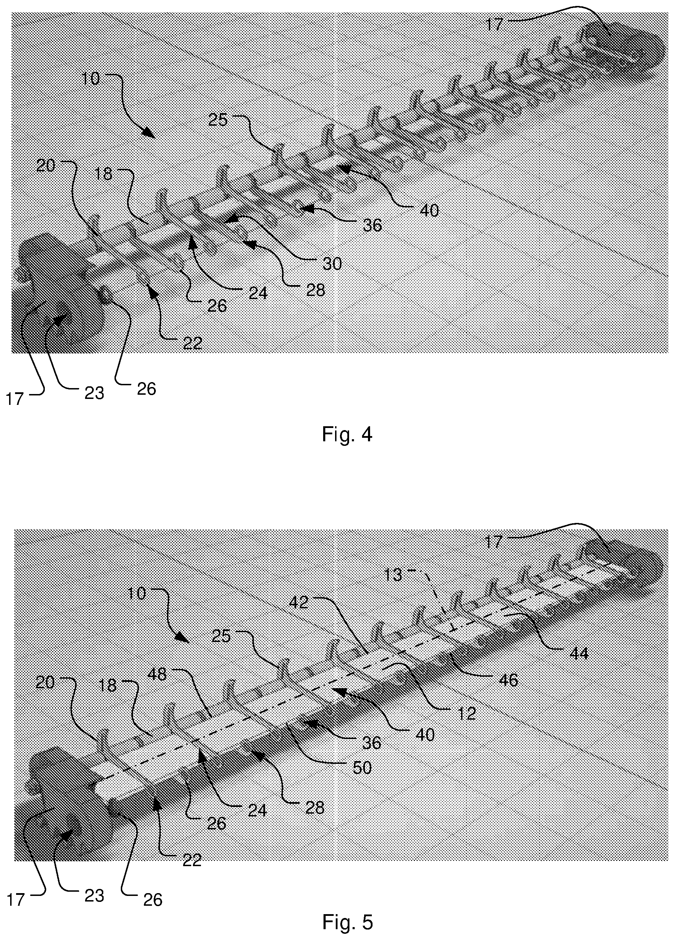

The mounting system 10 comprises a first set of links 22 mountable in spaced, parallel relationship between the pair of belts 16, each link 20 of the first set of links 22 defining a first recessed portion 24 (Figure 3a). The mounting system 10 further comprises a second set of links 28 mountable in spaced, parallel relationship between the pair of belts 16, the second set of links 28 being configured to be interposed between, and aligned with, the first set of links 22 (Figure 3b). Each link 26 of the second set of links 28 defines a second recessed portion 30, the second recessed portions 30 facing in a direction opposite to that of the first recessed portions 24 of the links 20 of the first set of links 22, in use, so that the first and second recessed portions 24, 30, together, effectively define a channel 40 in which the screen panel 12 is receivable (Figures 4-6).

As shown in Figure 3a, each link 20 of the first set of links 22 comprises a lifter in the form of a hook 25 to assist with removing filamentary solid waste, such as hair or fibres, from the fluid. Each link 20 also defines a slot 21 provided through the hook 25. As shown in Figures 3a and 3b, each end 32, 33, 34, 35 of each link 20, 26 of the first and second sets of links 22, 28 forms a mounting formation defining an aperture 36 via which that end 32, 33, 34, 35 of the link 20, 26 is mountable to one of the shafts 18 by way of the shaft 18 passing through the aperture 36.

It will be appreciated by those skilled in the art that one or more links 20, 26 of the first and/or second set of links 22, 28 may comprise the hook 25 or any other suitable lifter, and that the mounting formation may be formed in any suitable manner so as to allow for the links 20, 26 to be mounted to the shafts 18.

In some embodiments, the links 20 of the first set of links 22 alternate with the links 26 of the second set of links 28 along a length 42 of the screen panel 12 when both the first and second sets of links 22, 28 are mounted to the shafts 18. The links 20 and 26 are spaced equally from one another along the length 42 of the screen panel 12 to improve the stability of the screen panel 12 in the continuous belt screen assembly 14. It will be appreciated that, in some embodiments, the links 20 and 26 may not necessarily alternate but could be grouped in other configurations.

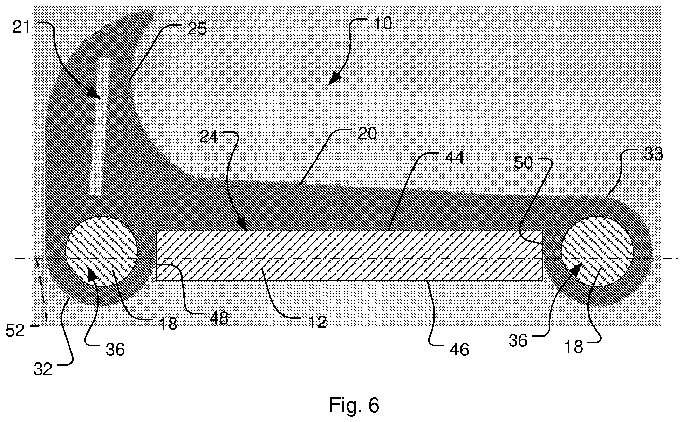

In some embodiments and as best shown in Figures 3a, 3b and 6, each of the first recessed portions 24 and the second recessed portions 30 is substantially U-shaped to bound at least one side 44, 46 and opposed longitudinal edges 48, 50 of the screen panel 12. In this embodiment, the first and second recessed portions 24, 30 are shaped so as to be disposed about a longitudinal axis 13 of the screen panel 12 in opposite directions in order to define the channel 40. It will be appreciated by the person skilled in the art that the first and second recessed portions 24, 30 may be shaped in any suitable manner so as to be mountable to face in opposite directions to each other for defining the channel 40.

In use, the shafts 18 of the continuous belt screen assembly 14 are passed through the apertures 36 of the first and second sets of links 22, 28, such that the links 20 of the first set of links 22 alternate with the links 26 of the second set of links 28 along the length 42 of the screen panel 12, with the first and second recessed portions 24, 30 facing in opposite directions to form the channel 40. The screen panels 18 are arranged in the channel 40 such that the first set of links 22 is disposed on the side 44 of the screen panel 12, and such that the second set of links 28 is disposed on the opposed side 46 of the screen panel 12. The shafts 18 are connected to the pair of belt links 17 via apertures 23 defined by the belt links 17. This process is repeated until the endless belts 16 are fully formed with the plurality of screen panels 12 mounted therebetween as shown in Figures 1 and 2.

Advantageously, the first and second sets of links 22, 28 do not require tight manufacturing tolerances, as the screen panel 12 does not pass through the sets of links 22, 28, but rather, will rest within the channel 40 formed by mounting the sets of links 22, 28 according to the present disclosure. Further, as best shown in Figure 6, the screen panel 12 is able to be secured in the channel 40 such that an axial plane of the screen panel 12, represented by the dashed line 52, is coincident with, or intersects, any part of the shafts 18. The "axial plane" will be understood to be a plane through the screen panel 12, parallel to the longitudinal axis 13, and intersecting the opposed longitudinal edges 48, 50. Figure 6 shows only the link 20 for illustrative purposes, though it will be appreciated by the person skilled in the art that a similar intersecting arrangement is provided by the link 26. This intersecting arrangement allows for ease of rotation during motion of the screen panels 12 while the continuous belt screen assembly 14 is in use.

It will be appreciated by the person skilled in the art that a continuous belt screen assembly 14 may be provided with the mounting system 10 included. It will also be appreciated that a mounting kit may be provided as a standalone product including the first set of links and the second set of links configured to be used according to the present disclosure.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

## Claims

1. A mounting system (10) for mounting a screen panel (12) in a continuous belt screen assembly (14) used for removal of solid waste from fluid, the continuous belt screen assembly (14) comprising a pair of spaced, opposed endless belts (16) and a plurality of screen panels (12) arranged between the belts (16),
**characterised in that** the mounting system (10) comprises:
a first set of links (22) mountable in spaced, parallel relationship between the pair of belts (16), each link (20) of the first set of links (22) defining a first recessed portion (24); and
a second set of links (28) mountable in spaced, parallel relationship between the pair of belts (16), the second set of links (28) being configured to be interposed between, and aligned with, the first set of links (22), each link (26) of the second set of links (28) defining a second recessed portion (30), the second recessed portions (30) facing in a direction opposite to that of the first recessed portions (24), in use, so that the first and second recessed portions (24, 30), together, define a channel (40) in which the screen panel (12) is receivable.

2. The mounting system (10) of claim 1 in which the links (20) of the first set of links (22) are configured to alternate with the links (26) of the second set of links (28) along a length (42) of the screen panel (12).

3. The mounting system (10) of claim 1 or claim 2, in which the first set of links (22) is configured to be disposed on one side (44) of the screen panel (12), and in which the second set of links (28) is configured to be disposed on an opposed side (46) of the screen panel (12).

4. The mounting system (10) of any one of the preceding claims, in which each of the first recessed portions (24) and the second recessed portions (30) is substantially U-shaped to bound at least one side (44, 46) and opposed longitudinal edges (48, 50) of the screen panel (12).

5. The mounting system (10) of any one of the preceding claims, in which the continuous belt screen assembly (14) comprises shafts (18) extending between the pair of belts (16), and in which each end (32, 33, 34, 35) of each link (20, 26) of the first and second sets of links (22, 28) comprises a mounting formation via which that end (32, 33, 34, 35) of the link (20, 26) is mountable to one of the shafts (18).

6. The mounting system (10) of claim 5, in which an axial plane of the screen panel (12) intersects a pair of the shafts (18), in use.

7. The mounting system (10) of any one of the preceding claims, in which at least one link (20, 26) of the first and second sets of links (22, 28) comprises a lifter to assist with removing the solid waste from the fluid.

8. The mounting system (10) of claim 7, in which the lifter is in the form of a hook (25).

9. A continuous belt screen assembly (14) comprising the mounting system (10) as claimed in any one of the preceding claims.

10. A mounting kit for mounting a screen panel (12) in a continuous belt screen assembly (14) used for removal of solid waste from fluid, the continuous belt screen assembly (14) comprising a pair of spaced, opposed endless belts (16) and a plurality of screen panels (12) arranged between the belts (16),
**characterised in that** the kit comprises:
a first set of links (22), each link (20) of the first set of links (22) defining a first recessed portion (24); and
a second set of links (28), each link (26) of the second set of links (28) defining a second recessed portion (30),
in which the first and second sets of links (22, 28) are mountable in spaced, parallel relationship between the pair of belts (16), the second set of links (28) being configured to be interposed between, and aligned with, the first set of links (22) such that the second recessed portions (30) face in a direction opposite to that of the first recessed portions (24) for defining a channel (40) in which the screen panel (12) is receivable.

11. The mounting kit of claim 10 in which the links (20) of the first set of links (22) are configured to alternate with the links (26) of the second set of links (28) along a length (42) of the screen panel (12).

12. The mounting kit of claim 10 or claim 11, in which the first set of links (22) is configured to be disposed on one side (44) of the screen panel (12), and in which the second set of links (28) is configured to be disposed on an opposed side (46) of the screen panel (12).

13. The mounting kit of any one of claims 10 to 12, in which each of the first recessed portions (24) and the second recessed portions (30) is substantially U-shaped to bound at least one side (44, 46) and opposed longitudinal edges (48, 50) of the screen panel (12).

14. The mounting kit of any one of claims 10 to 13, in which the continuous belt screen assembly (14) comprises shafts (18) extending between the pair of belts (16), and in which each end (32, 33, 34, 35) of each link (20, 26) of the first and second sets of links (22, 28) comprises a mounting formation via which that end (32, 33, 34, 35) of the link (20, 26) is mountable to one of the shafts (18).

15. The mounting kit of any one of claims 10 to 14, in which at least one link (20, 26) of the first and second sets of links (22, 28) comprises a lifter, preferably in the form of a hook, to assist with removing the solid waste from the fluid.

## Patentansprüche

1. Befestigungssystem (10) zur Befestigung eines Siebpaneels (12) in einer kontinuierlichen Bandsiebanordnung (14), die zur Entfernung von festem Abfall aus Fluid verwendet wird, wobei die kontinuierliche Bandsiebanordnung (14) ein Paar voneinander beabstandeter, einander gegenüberliegender Endlosbänder (16) und eine Mehrzahl von zwischen den Bändern (16) angeordneten Siebpaneelen (12) umfasst,
**dadurch gekennzeichnet, dass** das Befestigungssystem (10) umfasst:
einen ersten Satz von Gliedern (22), der in voneinander beabstandeter, paralleler Beziehung zwischen dem Paar von Bändern (16) montierbar ist, wobei jedes Glied (20) des ersten Satzes von Gliedern (22) einen ersten ausgesparten Abschnitt (24) definiert; und
einen zweiten Satz von Gliedern (28), der in voneinander beabstandeter, paralleler Beziehung zwischen dem Paar von Bändern (16) montierbar ist, wobei der zweite Satz von Gliedern (28) dazu konfiguriert ist, zwischen dem ersten Satz von Gliedern (22) eingefügt und mit diesem ausgerichtet zu werden, wobei jedes Glied (26) des zweiten Satzes von Gliedern (28) einen zweiten ausgesparten Abschnitt (30) definiert, wobei die zweiten ausgesparten Abschnitte (30) im Gebrauch in eine Richtung weisen, die derjenigen der ersten ausgesparten Abschnitte (24) entgegengesetzt ist, sodass die ersten und zweiten ausgesparten Abschnitte (24, 30) zusammen einen Kanal (40) definieren, in welchem das Siebpaneel (12) aufnehmbar ist.

2. Befestigungssystem (10) nach Anspruch 1, wobei die Glieder (20) des ersten Satzes von Gliedern (22) dazu konfiguriert sind, sich entlang einer Länge (42) des Siebpaneels (12) mit den Gliedern (26) des zweiten Satzes von Gliedern (28) abzuwechseln.

3. Befestigungssystem (10) nach Anspruch 1 oder Anspruch 2, wobei der erste Satz von Gliedern (22) dazu konfiguriert ist, auf einer Seite (44) des Siebpaneels (12) angeordnet zu werden, und wobei der zweite Satz von Gliedern (28) dazu konfiguriert ist, auf einer gegenüberliegenden Seite (46) des Siebpaneels (12) angeordnet zu werden.

4. Befestigungssystem (10) nach einem der vorhergehenden Ansprüche, wobei jeder der ersten ausgesparten Abschnitte (24) und der zweiten ausgesparten Abschnitte (30) im Wesentlichen U-förmig ist, um mindestens eine Seite (44, 46) und gegenüberliegende Längskanten (48, 50) des Siebpaneels (12) zu begrenzen.

5. Befestigungssystem (10) nach einem der vorhergehenden Ansprüche, wobei die kontinuierliche Bandsiebanordnung (14) Wellen (18) umfasst, die sich zwischen dem Paar von Bändern (16) erstrecken, und wobei jedes Ende (32, 33, 34, 35) jedes Glieds (20, 26) des ersten und zweiten Satzes von Gliedern (22, 28) eine Befestigungsformation umfasst, über welche dieses Ende (32, 33, 34, 35) des Glieds (20, 26) an einer der Wellen (18) montierbar ist.

6. Befestigungssystem (10) nach Anspruch 5, wobei eine axiale Ebene des Siebpaneels (12) im Gebrauch ein Paar der Wellen (18) schneidet.

7. Befestigungssystem (10) nach einem der vorhergehenden Ansprüche, wobei mindestens ein Glied (20, 26) des ersten und zweiten Satzes von Gliedern (22, 28) einen Mitnehmer umfasst, um bei der Entfernung des festen Abfalls aus dem Fluid zu helfen.

8. Befestigungssystem (10) nach Anspruch 7, wobei der Mitnehmer in Form eines Hakens (25) ausgebildet ist.

9. Kontinuierliche Bandsiebanordnung (14), umfassend das Befestigungssystem (10) nach einem der vorhergehenden Ansprüche.

10. Befestigungssatz zur Befestigung eines Siebpaneels (12) in einer kontinuierlichen Bandsiebanordnung (14), die zur Entfernung von festem Abfall aus Fluid verwendet wird, wobei die kontinuierliche Bandsiebanordnung (14) ein Paar voneinander beabstandeter, einander gegenüberliegender Endlosbänder (16) und eine Mehrzahl von zwischen den Bändern (16) angeordneten Siebpaneelen (12) umfasst,
**dadurch gekennzeichnet, dass** der Satz umfasst:
einen ersten Satz von Gliedern (22), wobei jedes Glied (20) des ersten Satzes von Gliedern (22) einen ersten ausgesparten Abschnitt (24) definiert; und
einen zweiten Satz von Gliedern (28), wobei jedes Glied (26) des zweiten Satzes von Gliedern (28) einen zweiten ausgesparten Abschnitt (30) definiert,
wobei der erste und zweite Satz von Gliedern (22, 28) in voneinander beabstandeter, paralleler Beziehung zwischen dem Paar von Bändern (16) montierbar sind, wobei der zweite Satz von Gliedern (28) dazu konfiguriert ist, zwischen dem ersten Satz von Gliedern (22) eingefügt und mit diesem ausgerichtet zu werden, derart, dass die zweiten ausgesparten Abschnitte (30) in eine Richtung weisen, die derjenigen der ersten ausgesparten Abschnitte (24) entgegengesetzt ist, zum Definieren eines Kanals (40), in welchem das Siebpaneel (12) aufnehmbar ist.

11. Befestigungssatz nach Anspruch 10, wobei die Glieder (20) des ersten Satzes von Gliedern (22) dazu konfiguriert sind, sich entlang einer Länge (42) des Siebpaneels (12) mit den Gliedern (26) des zweiten Satzes von Gliedern (28) abzuwechseln.

12. Befestigungssatz nach Anspruch 10 oder Anspruch 11, wobei der erste Satz von Gliedern (22) dazu konfiguriert ist, auf einer Seite (44) des Siebpaneels (12) angeordnet zu werden, und wobei der zweite Satz von Gliedern (28) dazu konfiguriert ist, auf einer gegenüberliegenden Seite (46) des Siebpaneels (12) angeordnet zu werden.

13. Befestigungssatz nach einem der Ansprüche 10 bis 12, wobei jeder der ersten ausgesparten Abschnitte (24) und der zweiten ausgesparten Abschnitte (30) im Wesentlichen U-förmig ist, um mindestens eine Seite (44, 46) und gegenüberliegende Längskanten (48, 50) des Siebpaneels (12) zu begrenzen.

14. Befestigungssatz nach einem der Ansprüche 10 bis 13, wobei die kontinuierliche Bandsiebanordnung (14) Wellen (18) umfasst, die sich zwischen dem Paar von Bändern (16) erstrecken, und wobei jedes Ende (32, 33, 34, 35) jedes Glieds (20, 26) des ersten und zweiten Satzes von Gliedern (22, 28) eine Befestigungsformation umfasst, über welche dieses Ende (32, 33, 34, 35) des Glieds (20, 26) an einer der Wellen (18) montierbar ist.

15. Befestigungssatz nach einem der Ansprüche 10 bis 14, wobei mindestens ein Glied (20, 26) des ersten und zweiten Satzes von Gliedern (22, 28) einen Mitnehmer, vorzugsweise in Form eines Hakens, umfasst, um bei der Entfernung des festen Abfalls aus dem Fluid zu helfen.

## Revendications

1. Système de montage (10) destiné au montage d'un panneau de criblage (12) dans un ensemble de crible à bande continue (14) utilisé pour l'élimination de déchets solides d'un fluide, l'ensemble de crible à bande continue (14) comprenant une paire de bandes sans fin (16) espacées et opposées et une pluralité de panneaux de criblage (12) disposés entre les bandes (16),
**caractérisé en ce que** le système de montage (10) comprend :
un premier ensemble de maillons (22) montable selon une relation espacée et parallèle entre la paire de bandes (16), chaque maillon (20) du premier ensemble de maillons (22) définissant une première portion évidée (24) ; et
un second ensemble de maillons (28) montable selon une relation espacée et parallèle entre la paire de bandes (16), le second ensemble de maillons (28) étant configuré pour être interposé entre le premier ensemble de maillons (22) et aligné avec celui-ci, chaque maillon (26) du second ensemble de maillons (28) définissant une seconde portion évidée (30), les secondes portions évidées (30) faisant face, en utilisation, dans une direction opposée à celle des premières portions évidées (24), de sorte que les premières et secondes portions évidées (24, 30) définissent ensemble un canal (40) dans lequel le panneau de criblage (12) peut être reçu.

2. Système de montage (10) selon la revendication 1, dans lequel les maillons (20) du premier ensemble de maillons (22) sont configurés pour alterner avec les maillons (26) du second ensemble de maillons (28) le long d'une longueur (42) du panneau de criblage (12).

3. Système de montage (10) selon la revendication 1 ou la revendication 2, dans lequel le premier ensemble de maillons (22) est configuré pour être disposé sur un côté (44) du panneau de criblage (12), et dans lequel le second ensemble de maillons (28) est configuré pour être disposé sur un côté opposé (46) du panneau de criblage (12).

4. Système de montage (10) selon l'une quelconque des revendications précédentes, dans lequel chacune des premières portions évidées (24) et des secondes portions évidées (30) est sensiblement en forme de U afin de délimiter au moins un côté (44, 46) et des bords longitudinaux opposés (48, 50) du panneau de criblage (12).

5. Système de montage (10) selon l'une quelconque des revendications précédentes, dans lequel l'ensemble de crible à bande continue (14) comprend des arbres (18) s'étendant entre la paire de bandes (16), et dans lequel chaque extrémité (32, 33, 34, 35) de chaque maillon (20, 26) des premier et second ensembles de maillons (22, 28) comprend une formation de montage par l'intermédiaire de laquelle cette extrémité (32, 33, 34, 35) du maillon (20, 26) peut être montée sur l'un des arbres (18).

6. Système de montage (10) selon la revendication 5, dans lequel un plan axial du panneau de criblage (12) intersecte, en utilisation, une paire des arbres (18).

7. Système de montage (10) selon l'une quelconque des revendications précédentes, dans lequel au moins un maillon (20, 26) des premier et second ensembles de maillons (22, 28) comprend un releveur destiné à aider à l'élimination des déchets solides du fluide.

8. Système de montage (10) selon la revendication 7, dans lequel le releveur est sous la forme d'un crochet (25).

9. Ensemble de crible à bande continue (14) comprenant le système de montage (10) tel que revendiqué dans l'une quelconque des revendications précédentes.

10. Kit de montage destiné au montage d'un panneau de criblage (12) dans un ensemble de crible à bande continue (14) utilisé pour l'élimination de déchets solides d'un fluide, l'ensemble de crible à bande continue (14) comprenant une paire de bandes sans fin (16) espacées et opposées et une pluralité de panneaux de criblage (12) disposés entre les bandes (16),
**caractérisé en ce que** le kit comprend :
un premier ensemble de maillons (22), chaque maillon (20) du premier ensemble de maillons (22) définissant une première portion évidée ; et
un second ensemble de maillons (28), chaque maillon (26) du second ensemble de maillons (28) définissant une seconde portion évidée (30),
dans lequel les premier et second ensembles de maillons (22, 28) sont montables selon une relation espacée et parallèle entre la paire de bandes (16), le second ensemble de maillons (28) étant configuré pour être interposé entre le premier ensemble de maillons (22) et aligné avec celui-ci de telle sorte que les secondes portions évidées (30) fassent face dans une direction opposée à celle des premières portions évidées (24) afin de définir un canal (40) dans lequel le panneau de criblage (12) peut être reçu.

11. Kit de montage selon la revendication 10, dans lequel les maillons (20) du premier ensemble de maillons (22) sont configurés pour alterner avec les maillons (26) du second ensemble de maillons (28) le long d'une longueur (42) du panneau de criblage (12).

12. Kit de montage selon la revendication 10 ou la revendication 11, dans lequel le premier ensemble de maillons (22) est configuré pour être disposé sur un côté (44) du panneau de criblage (12), et dans lequel le second ensemble de maillons (28) est configuré pour être disposé sur un côté opposé (46) du panneau de criblage (12).

13. Kit de montage selon l'une quelconque des revendications 10 à 12, dans lequel chacune des premières portions évidées (24) et des secondes portions évidées (30) est sensiblement en forme de U afin de délimiter au moins un côté (44, 46) et des bords longitudinaux opposés (48, 50) du panneau de criblage (12).

14. Kit de montage selon l'une quelconque des revendications 10 à 13, dans lequel l'ensemble de crible à bande continue (14) comprend des arbres (18) s'étendant entre la paire de bandes (16), et dans lequel chaque extrémité (32, 33, 34, 35) de chaque maillon (20, 26) des premier et second ensembles de maillons (22, 28) comprend une formation de montage par l'intermédiaire de laquelle cette extrémité (32, 33, 34, 35) du maillon (20, 26) peut être montée sur l'un des arbres (18).

15. Kit de montage selon l'une quelconque des revendications 10 à 14, dans lequel au moins un maillon (20, 26) des premier et second ensembles de maillons (22, 28) comprend un releveur, de préférence sous la forme d'un crochet, destiné à aider à l'élimination des déchets solides du fluide.
